Europäisches Patentamt

European Patent Office

Office européen des brevets

(11) Numéro de publication: **0 308 292**
**A1**

# (12) DEMANDE DE BREVET EUROPEEN

(21) Numéro de dépôt: 88402206.2

(22) Date de dépôt: 01.09.88

(51) Int. Cl.4: **H 01 H 3/40**
**H 01 H 19/18**

(30) Priorité: 15.09.87 FR 8712774

(43) Date de publication de la demande:
22.03.89 Bulletin 89/12

(84) Etats contractants désignés: **DE ES GB IT SE**

(71) Demandeur: **ROCKWELL-CIM**
**Tour Gan - Cédex 13**
**F-92082 Paris La Défense 2 (FR)**

(72) Inventeur: **Periou, Pierre**
**15 Les Bocages Bruns**
**F-95000 Cergy Pontoise (FR)**

**Boilley, Michel**
**6 rue Lacroix**
**F-75017 Paris (FR)**

(74) Mandataire: **Martin, Jean-Paul et al**
**c/0 CABINET LAVOIX 2, Place d'Estienne d'Orves**
**F-75441 Paris Cedex 09 (FR)**

(54) **Programmateur électromécanique cyclique, destiné à la commande d'organes tels que par exemple toits ouvrants de véhicule.**

(57) Ce programmateur comporte un moteur électrique (6), un train d'engrenages (7) à roue d'impulsions (26) entraîné par le moteur et dont une roue de sortie (5) engrène sur au moins une crémaillère (3, 4) d'entraînement d'un organe (1) à cycle de déplacement programmable, une roue réceptrice (9) apte à coopérer avec le train d'engrenages (7) pour recevoir de celui-ci des impulsions de commande du cycle de l'organe programmable, un circuit électrique (12, 13, 17, 18) associé à la roue réceptrice (9) et adapté pour transmettre au moteur (6) des ordres correspondant à la nature des impulsions reçues par la roue réceptrice; ce programateur comprend des moyens pour faire délivrer par la roue (26) des impulsions uniquement dans des zones utiles prédéterminées du cycle de l'organe programmable, et le train d'engrenages (7) est un train différentiel pourvu d'une roue (25) de commande sans démultiplication de la roue de sortie (5). Ce programmateur ne délivre des impulsions de commande que dans les zones utiles du cycle et avec une précision très supérieure à celle des programmateurs connus.

FIG.1

EP 0 308 292 A1

Description

## Programmateur électromécanique cyclique, destiné à la commande d'organes tels que par exemple toits ouvrants de véhicule

La présente invention a pour objet un programmateur électromécanique cyclique du type comportant un moteur électrique, un train d'engrenages à roue d'impulsions, entraîné par le moteur et dont une roue de sortie engrène sur au moins un moyen d'entraînement d'un organe à cycle de déplacement programmable, une roue réceptrice apte à coopérer avec le train d'engrenages pour recevoir de celui-ci des impulsions de commande du cycle de l'organe programmable, un circuit électrique associé à la roue réceptrice et adapté pour transmettre au moteur des ordres correspondant à la nature des impulsions reçues par la roue réceptrice.

Un tel programmateur peut recevoir de nombreuses applications, notamment sur des véhicules automobiles pour la commande d'accessoires tels que des toits ouvrants.

Ainsi, on connait un programmateur pour la commande d'un toit ouvrant, mécaniquement lié à deux câbles crémaillères entraînés par la roue de sortie, les trois positions d'arrêt du moteur étant obtenues par des interrupteurs électriques commandés par une roue à cames. Comme cette roue à cames doit faire moins d'un tour par cycle de déplacement, il existe un train d'engrenages réducteur (de l'ordre de 1/20) entre la roue de sortie et la roue à cames.

Ce dispositif est lourd et nécessite de nombreux interrupteurs. De plus, il manque de précision : celle-ci est constante sur l'ensemble du cycle, mais insuffisante en certains points et inutile dans certaines zones où il ne se passe rien. Ainsi, le manque de précision des positions d'arrêt du toit ouvrant, surtout sa position de fermeture, provoque des fuites des bruits dûs au tourbillonnement de l'air, et des pénétrations d'eau de pluie dans le véhicule. A titre indicatif, l'incertitude dans la position des toits ouvrants équipés des programmateurs connus est d'environ 4 mm.

L'invention a donc pur but de réaliser un programmateur du type ci-dessus, dont la précision soit considérablement améliorée dans les zones du cycle ou des évènements se produisent, par exemple s'il s'agit d'un toit ouvrant, ses positions d'ouverture complète, de fermeture complète, d'ouverture partielle par coulissement ou par basculement.

Suivant l'invention, le train différentiel est pourvu de moyens pour faire délivrer par la roue d'impulsions des impulsions uniquement dans des zones utiles prédéterminées du cycle de l'organe programmable, et le train d'engrenages est un train différentiel réalisé sans démultiplication entre sa roue d'impulsions et sa roue de sortie.

Ainsi, des impulsions de commande ne sont fournies à l'organe programmé que dans les zones intéressantes et avec une précision largement supérieure à celle obtenue jusqu'à présent.

Suivant un mode de réalisation de d'invention, la roue d'impulsions contient au moins une dent déplaçable radialement entre une position complètement escamotée à l'intérieur de ladite roue et une position dans laquelle elle fait saillie radialement de cette roue et peut engrener avec la roue réceptrice en la faisant tourner d'un angle déterminé, et la roue de commande est une roue-came dans laquelle est ménagée un came de guidage des déplacements de la dent d'impulsions.

Grâce à des moyens appropriés prévus dans le train différentiel, la dent d'impulsions sort de la roue d'impulsions à des moments prédéterminés du cycle et entraîne la roue réceptrice laquelle, par l'intermédiaire d'un circuit électrique approprié, commande l'arrêt du moteur d'entraînement du train différentiel, afin de stopper l'organe entraîne par ce train.

La position de l'organe entraîné par le train différentiel est donc obtenue sans démultiplication entre la roue de commande du train différentiel et sa roue de sortie, ces deux roues étant en effet montées sur le même arbre, et ce contrairement aux programmateurs antérieurs. La précision angulaire correspondante est donc très supérieure à celle obtenue antérieurement, par exemple de 1° au lieu de 20°, avec un accroissement de précision corrélatif pour la position linéaire de l'organe commandé.

D'autres particularités et avantages de l'invention apparaitront au cours de la description qui va suivre, faite en référence aux dessins annexés qui en illustrent à titre d'exemple plusieurs modes de réalisation non limitatifs :

- la Figure 1 est une vue en perspective d'un premier mode de réalisation du programmateur électromécanique cyclique conforme à l'invention;
- la Figure 2 est une vue en coupe partielle à échelle agrandie du programmateur de la Figure 1 avec sa dent d'impulsions en position inactive;
- la Figure 3 est une vue analogue à la Figure 2 montrant la dent d'impulsions en position active, en prise avec la roue réceptrice;
- la Figure 4 est une vue de dessus d'un engrenage du train différentiel constituant la roue came de commande de la dent d'impulsion dans le train différentiel du programmateur des Figures 1 à 3;
- la Figure 5 est une vue en élévation latérale de la roue d'impulsions et de sa dent dans le train différentiel des Figures 1 à 3;
- la Figure 6 est une vue de dessus en plan de la roue-came et de la roue réceptrice du programmateur des Figures 1 à 5 en position verrouillée en rotation, la dent d'impulsions étant rentrée dans la roue;
- la Figure 7 est une vue analogue à la Figure 6 montrant la dent d'impulsions sortie de la roue et en position d'engrènement avec la roue réceptrice;
- les Figures 8 et 9 sont des vues de dessus en plan analogues respectivement aux Figures 6 et 7 d'un second mode de réalisation du programmateur selon l'invention;

- les Figures 10 et 11 sont des vues de dessus en plan respectivement analogues aux Figures 6 et 7 d'un troisième mode de réalisation du programmateur selon l'invention;

- la Figure 12 est une vue de dessus simplifiée d'un véhicule automobile équipé d'un toit ouvrant pouvant être commandé par un programmateur selon l'invention.

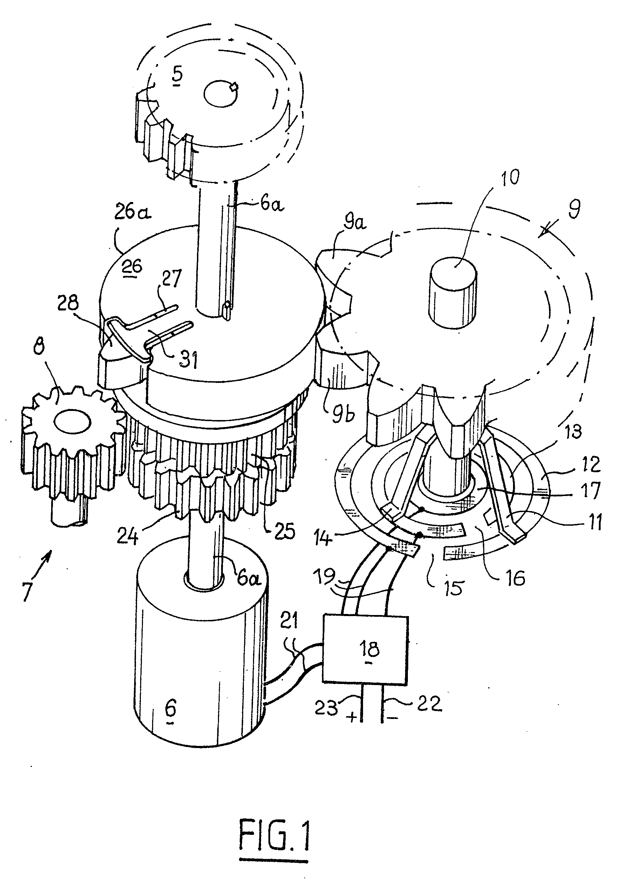

Le dispositif représenté aux Figures 1 à 7 est un programmateur électromécanique cyclique destiné à la commande des déplacements d'un organe suivant un cycle prédéterminé.

Cet organe peut être par exemple, un toit ouvrant 1 d'un véhicule 2 (Figure 12) pouvant coulisser longitudinalement dans une ouverture du toit du véhicule grâce à des câbles crémaillères souples 3, 4 d'entraînement, eux-mêmes actionnés par une roue de sortie 5 du programmateur. Le toit 1 peut également basculer en position ouverte par des moyens connus en soi et non représentés.

Le programmateur des Figures 1 à 7 comprend un moto-réducteur électrique 6, un train d'engrenages différentiel 7 monté sur l'arbre de sortie 6a du motoréducteur 6 coaxialement à celui-ci, ce train différentiel 7 étant terminé par la roue 5, une roue réceptrice 9 d'axe 10 pouvant coopérer avec le train 7, des balais 11 électriquement conducteurs fixés à la roue 9 avec laquelle ils forment un commutateur, et des pistes électriques fixes circulaires 12, 13, 17 sur lesquelles frottent les extrémités des balais 11, 14. Les pistes présentent des interruptions telles que 15, 16 en des zones déterminées, et sont reliées à un boîtier de commande électrique 18 par des connexions 19, le boîtier 18 étant lui-même électriquement relié d'une part au moto-réducteur 6 par des connexions 21 et d'autre part à une source de courant continu par deux connexions 22, 23. Les pistes 12, 13, 17 sont parcourues par de faibles courants qui commandent des relais placés dans le boîtier de commande 18. Lorsque le commutateur constitué par la roue 9 et les balais associés tourne d'un angle déterminé, cette rotation peut provoquer un changement électrique sur les pistes, tel qu'absence de courant, inversion de courant,... qui modifie la commande du moteur 6, par arrêt ou changement de vitesse, etc... de celui-ci.

Le train d'engrenages 7 comporte successivement, montés sur l'arbre de sortie 6a, un engrenage 24 solidaire de l'arbre 6, un engrenage 25 monté fou sur l'arbre 6a, une roue d'impulsions 26 solidaire de l'arbre 6a, puis la roue de sortie 5. Un pignon 8 est en prise avec l'engrenage 24 et la roue de commande 25 afin de transmettre à la seconde la rotation du premier. La roue 25 commande une dent de sortie 28 de la roue 26 en des zones prédéterminées du cycle comme expliqué ci-après, et des moyens sont également prévus pour faire délivrer par la roue 26 des impulsions uniquement dans des zones utiles prédéterminées du cycle de l'organe programmable entraîné par la roue 5.

On décrira maintenant plus en détail les engrenages 24, 25, 8 et la roue d'impulsions 26.

Le premier engrenage 25 du train différentiel 7 monté fou sur l'arbre de sortie 6a, est pourvu d'une nombre déterminé X de dents ou égal à un multiple de ce nombre X, cet engrenage constituant la roue-came 25 de commande de la dent d'impulsions 28. Le second engrenage 24 du train 7, solidaire de l'arbre de sortie 6a du moteur 6, est pourvu de dents dont le nombre est supérieur ou inférieur d'une unité au nombre X, ou égal au même multiple que la roue-came 25, nombre augmenté ou diminué d'un multiplicateur M. Ce dernier est égal au rapport du nombre de dents du premier engrenage 25 au nombre de tours effectués par la roue de sortie 5 durant un cycle complet.

Ainsi, la roue dentée 24 comporte X-1 dents, par exemple 24 ou un multiple de 24, la roue 25, montée folle sur l'arbre moteur 6a, comporte (X) dents, soit 25 dents ou un multiple de 25. Le pignon 8 comporte un nombre de dents quelconque Y.

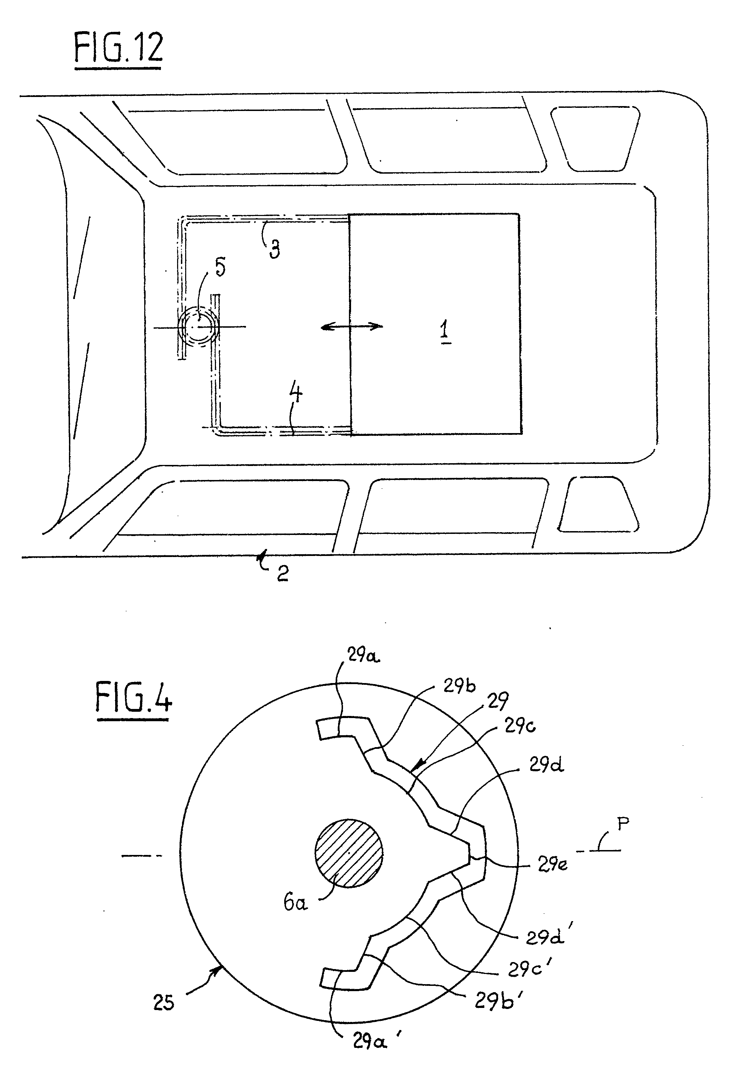

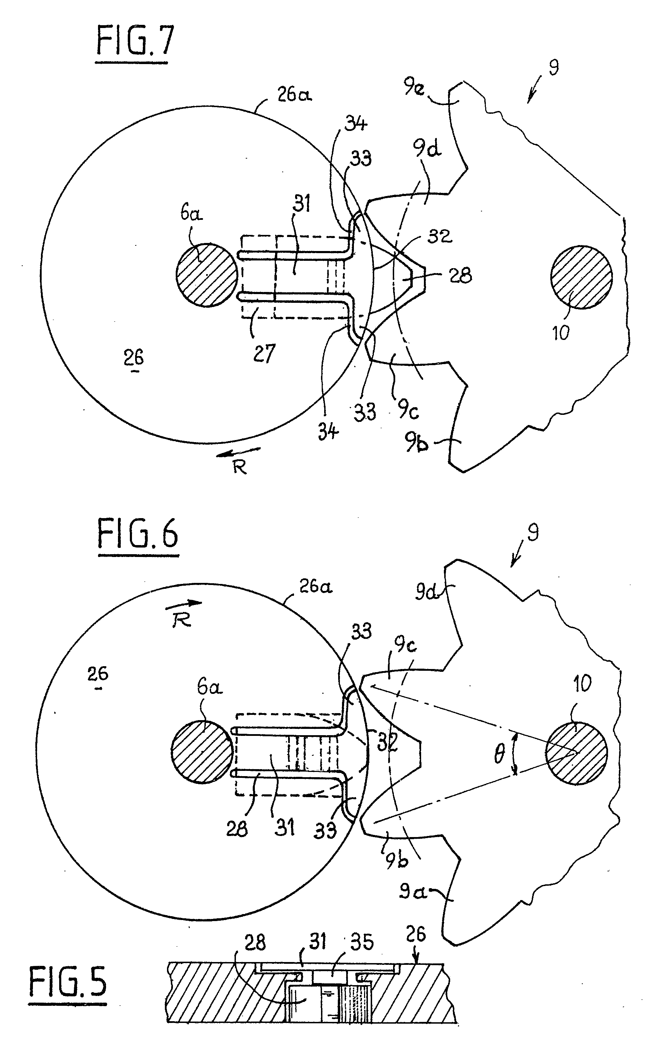

La roue 26 n'est pas dentée et sa circonférence forme un cercle de verrouillage 26a des dents 9a, 9b,... de la roue réceptrice, 9 qui est bloquée en rotation par la roue 26 lorsque ses dents 9a, 9b,... sont au contact du cercle de verrouillage 26a (Figures 1 et 6). Dans la roue 26 est formé un logement radial 27 dans lequel est montée à coulisse radialement une dent d'impulsions 28, déplaçable entre une position complètement escamotée à l'intérieur de la roue 26 et une position dans laquelle elle fait saillie radialement de cette roue et peut engrener avec la roue réceptrice 9 en faisant tourner celle-ci d'un angle déterminé. Les déplacements de la dent d'impulsions 28 sont guidés par une came 29 formée par une rainure dans la surface de la roue 25 en regard de la roue 26. Dans cette came 29 pénètre un picot ou doigt 30 de la dent 28, dont la position radiale est donc liée à celle de son doigt de guidage 30 dans le rainure-came 29. Cette dernière peut être constituée par exemple, comme illustré à la Figure 4, sur laquelle on voit qu'elle forme une rainure symétrique par rapport à un plan P passant par l'arbre 6a et perpendiculaire à la roue 25, de part et d'autre duquel sont ménagées des rampes convenablement profilées 29a, 29a', 29b, 29b', 29c, 29c', 29d, 29d'. Ces dernières sont reliées par une rampe centrale 29e suffisamment proche de la périphérie de la roue-came 25 pour que la dent 28 fasse saillie à l'extérieur de la roue 26 lorsque son doigt 30 se trouve en regard de la rampe 29e. Par contre, les deux rampes intermédiaires 29c, 29c' correspondent aux positions de la dent 28 complètement escamotées à l'intérieur de la roue 26. Entre les deux rampes 29a, 29a' et la rampe centrale 29e, les autres rampes peuvent être profilées de manière appropriée par exemple en prévoyant deux rampes rectilignes 29b, 29b' et 29d, 29d' entre lesquelles sont formées deux rampes incurvées 29c, 29c'.

Des moyens sont prévus par l'invention pour maintenir la roue réceptrice 9 fixe en rotation pendant que la dent d'impulsions 28 est complètement rentrée à l'intérieur de la roue 26. Ces moyens comprennent au moins un élément mobile mécaniquement lié à la roue d'impulsions 26, et dont la périphérie s'étend sur un secteur angulaire sensiblement supérieur à celui nécessaire à la sortie radiale de la dent 28, et complétant la circonférence de la roue 26 lorsque la dent 28 est complètement rentrée. Cet élément mobile est agencé pour pouvoir coopérer avec la dent 28 de manière à dégager le secteur angulaire de passage de celle-ci lorsqu'elle sort, et à occuper ce secteur angulaire lorsque la dent 28 est rentrée.

Dans la forme de réalisation des Figures 1 à 7, cet élément mobile est une lame flexible 31 venue de matière avec la roue 26 ou rapportée, en appui sur la roue 26 et la dent 28, s'étendant radialement au-dessus du logement 27 jusqu'à la circonférence du cercle de verrouillage 26a, que son bord extérieur circulaire 32 comlète. La lame 31 prend naissance au voisinage du centre de la roue 26 et, du côté du cercle de verrouillage 26a, son extrémité comporte deux pattes circonférentielles 33 s'étendant dans des directions opposées pour recouvrir un secteur angulaire défini par le bord extérieur 32. Ce dernier s'étend sur un secteur sensiblement égal à la somme du secteur de passage de la dent 28 et de deux évidements 34 ménagés sur la périphérie de la roue 26, de chaque côté du logement 27.

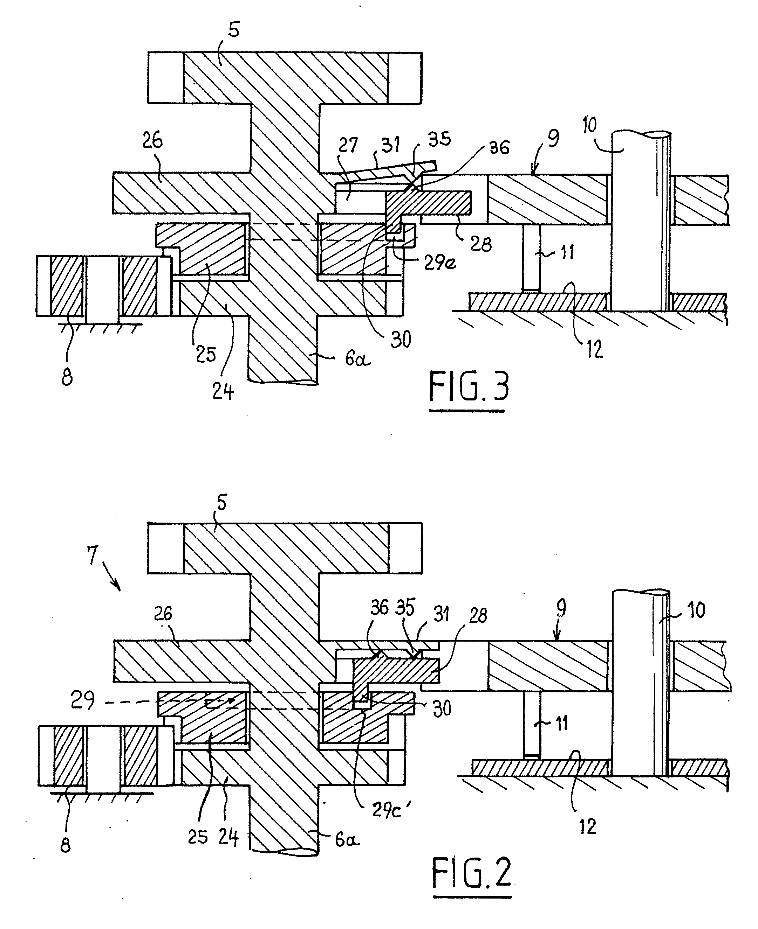

La lame 31 est munie d'un bossage 35 saillant dans le logement 27 et apte à coopérer avec un bossage correspondant 36 (Figures 2 et 3) formé sur la dent d'impulsions 28 lorsque cette dernière sort de la roue 26 ou rentre à l'intérieur de celle-ci.

Le fonctionnement du programmateur qui vient d'être décrit est le suivant.

Au repos, la dent 28 est escamotée dans la roue 26 dont le cercle de verrouillage 26a tangente deux dents 9a, 9b de la roue 9 ainsi bloquée en rotation (Figure 1). Lorsqu'on met en marche le moto-réducteur 6, son arbre 6a entraîne à la même vitesse les roues 24, 26 et 5. Le picot 30 étant au départ sur une rainure intermédiaire 29c ou 29c'. D'autre part, le pignon 8 entraîné par la roue 24 entraîne en rotation la roue-came folle 25. Lorsque la roue 24 effectue un tour, la roue-came 25 fait un tour moins une dent, et lorsque la roue 24 fait (X + 1) tours, la roue 25 fait (X) tours, les engrenages 24 et 25 format ainsi un mécanisme différentiel. On peut par exemple prévoir que la roue de sortie 5 fasse au maximum 25 tours pour un cycle, donc X = 25. La roue 24 aura donc 24 dents et la roue 25, 25 dents. Au bout de 25 tours des roues 24 et 5, la roue-came 25 aura donc fait 24 tours, et les roues 24, 25 se seront déphasées d'un tour.

Plus généralement, si la roue de sortie 25 doit faire 25 tours durant un cycle complet, la roue 25 peut avoir 25 dents et la roue 24 aura 24 ou 26 dents, le multiplicateur M étant donc égal à 1. (1 x 25 ± 1).

Si la roue 25 a 50 dents, le multiplicateur est égal à 2 et le nombre de dents de la roue 24 sera 50 ± 2 = 48 ou 52.

La roue 24 peut donc avoir X + 1 dents, au lieu de X - 1 dents, et aura donc fait X + 1 tours lorsque la roue 25 aura fait X tours. Dans les deux cas, on obtient un déphasage de 1 tour de la roue 25 par rapport à la roue 24 au bout de X tours de cette dernière.

Le déphasage angulaire progressif entre les engrenages 25 et 24 provoque le coulissement du picot 30 dans la came 29. Le picot 30 glisse donc le long des rampes successives 29c ou 29c' jusqu'à la rampe extérieure 29e, la dent 28 coulissant ainsi radialement à l'intérieur de la roue 26 jusqu'à une position où elle fait saillie à l'extérieur de celle-ci. La dent 28 passe ainsi progressivement de sa position rentrée des Figures 2 et 6 à sa position sortie des Figures 3 et 7, en tournant à la même vitesse de rotation que la roue 26.

Au début du déplacement radial de la dent 28, son bossage 36 est éloigné du bossage 35 de la lame 31, dont l'élasticité la maintient dans le plan de la surface de la roue 26, son bord extérieur 32 complétant la circonférence du cercle de verrouillage 26a. Lorsque la dent 28 a suffisamment avancé, le bossage 36 vient au contact du bossage 35 et soulève la lame 31 (Figure 3). La dent 28 est complètement sortie lorsque son picot 30 se trouve sur la rampe 29e. Si la roue 26 tourne dans le sens horaire R (Figure 6), la dent mobile 28 vient frapper la dent fixe 9c et s'intercale entre 9c et 9d (Figure 7). Quand la dent 28 quitte la dent 9c, la dent 9d est dans l'encoche 34 . La rotation de la roue 9 est ainsi maintenue jusqu'à ce que la dent 9c quitte l'encoche 34, c'est-à-dire quand la dent 9d a pris la place de la dent 9b de la Figure 6. Pour une impulsion donnée par la dent 28, la roue réceptrice 9 tourne donc d'un angle $2\theta$, $\theta$ étant l'angle au centre entre deux dents consécutives de la roue 9 (Figure 6).

La rotation de cette dernière entraîne les balais 11, 14 sur les pistes associées 12, 13 (un balai non visible sur la Figure 1 coopérant avec la piste intérieure 17), l'un au moins des balais venant se placer sur l'une, 15 ou 16, des interruptions des pistes. Un ordre est donc consécutivement donné au moto-réducteur 6 par le boîtier de commande 18 pour provoquer un évènement prédéterminé dans le cycle, par exemple un passage en petite vitesse ou au contraire à plus grande vitesse, ou encore un arrêt automatique de l'organe commandé par la rotation de la roue de sortie 5.

Le déphasage angulaire entre la roue-came 25 et la roue d'entrée 24 se poursuivant après la rotation de la roue 9 de l'angle $2\theta$, le dent d'impulsions 28 rentre progressivement à l'intérieur de la roue 26 du fait du coulissement radial de son picot 30 le long de l'une des rampes de guidage 29d, 29d' et 29c, 29c'. Pendant ce retour de la dent 28, son bossage 36 coopère avec le bossage 35 de la lame 31, celle-ci s'abaissant élastiquement jusqu'à sa position initiale.

L'engrènement des dents de la roue 9 avec la dent d'impulsions 28 est rendu possible par les dégagements latéraux 34 qui autorisent en effet la pénétration successive des dents 9c et 9b sous le bord extérieur 32 et sous les pattes 33, à l'intérieur de la circonférence du cercle 26a, l'accès à ces dégagements 34 étant rendu possible par le soulèvement de la lame 31 (Figure 3). Par ailleurs, la présence de la lame 31 et de son bord 32 empêche l'entrée des dents 9b, 9c,... lorsque la dent d'impulsions 28 est rentrée. La lame 31 constitue ainsi un système d'indexage mobile qui complète le cercle de verrouillage 26a quand le dent 28 est rentrée, et au contraire ouvre ce cercle 26a lorsque la dent 28 est sortie, et ce grâce aux bossages complémentaires 35, 36.

Les profils des rampes 29c, 29c', 29d, 29d' contiguës à la rampe centrale 29e sont agencés de manière que la dent 28 commence à sortie, grâce à l'une des rampes 29d et 29d' selon le sens de rotation de la roue 25, un peu moins d'un tour avant de fournir l'impulsion à la roue 9, et rentre en un peu moins d'un tour après l'impulsion. Ceci évite que la dent 28 ne vienne toucher les dents 9b ou 9c dans les tours précédant on suivant l'impulsion. La came 29 peut, par exemple (Figure 4), comporter quatre rampes 29b, 29b', 29d, 29d' qui provoquent à chaque fois la sortie de la dent 28 pour commander des évènements prédéterminés du cycle, par exemple trois arrêts du toit ouvrant 1 (Figure 12) : position complètement fermée, position partiellement ouverte, position complètement ouverte.

La roue 25 peut présenter plusieurs cames telles que 29 auxquelles sont associées autant de dents d'impulsions respectives.

A titre d'exemple numérique indicatif, on peut avoir pour un toit ouvrant 1 pouvant soit coulisser, soit basculer autour d'un axe transversal (par des moyens connus en soi et non représentés), le cycle ci-dessous:
- arrêt fin de course basculement : dent 28 sortie
- après 5 tours de la roue de sortie 5 : toit 1 fermé
- après 20 tours de la roue de sortie 5, fin de course longitudinale du toit (la dent d'impulsions 28 sortant et rentrant comme précédemment indiqué en un peu moins d'un tour). On profile alors la came de la roue 25 de telle manière que l'écart angulaire entre l'une de ses rampes terminales et sa rampe centrale correspondant à la sortie de la dent, corresponde à une position rentrée de la dent 28 pendant 4 tours et qu'au cinquième tour, la dent sorte. Il en est de même pour la course de coulissement du cycle ci-dessus : la dent 28 est rentrée pendant 19 tours et sort au cours du vingtième. L'ensemble des rampes de la came de la roue 25 est positionné sur moins de 360°.

Les avantages du programmateur selon l'invention sont les suivants.

Grâce au fait que les roues solidaires 24, 26, 5 sont montées sur le même arbre moteur 6a, il n'existe aucune démultiplication entre la roue d'impulsions 26 et la sortie 5, de sorte que la position angulaire de l'organe commandé par la roue de sortie 5 peut être obtenue avec la même précision que celle de la position angulaire de la roue d'impulsions 26. Cette précision est très supérieure à celle des mécanismes antérieurs connus, qui présentent une démultiplication entre la sortie et la roue d'impulsions.

- La roue d'impulsions 26 ne délivre à la roue réceptrice 9 des impulsions que dans les zones utiles du cycle de l'organe à commander, dans lesquelles toute la précision souhaitable peut donc être obtenue, tandis que la dent d'impulsions 28 est effacée dans les zones inutiles du cycle. La précision de la position de fermeture d'un toit ouvrant de véhicule pouvant ainsi être d'1 mm environ, supprime pratiquement les inconvénients constatés précédemment (bruits d'air à partir d'une certaine vitesse, pénétration de pluie, etc...).

- Le nombre des pièces en mouvement dans le train différentiel 7 est réduit à un minimum, ce qui diminue les jeux de fonctionnement par rapport aux dispositifs antérieurs.

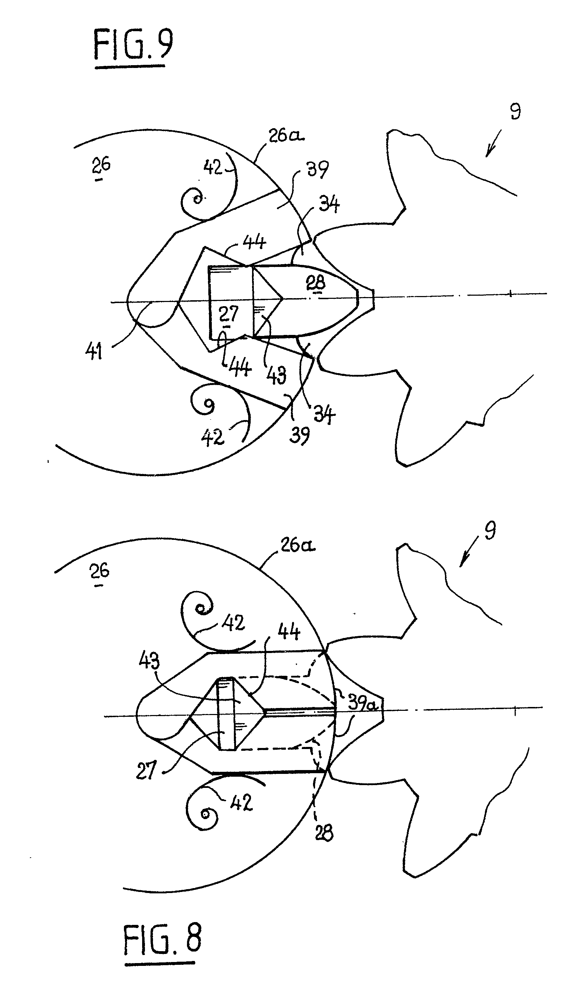

Dans le second mode de réalisation du programmateur (Figures 8 et 9), les moyens pour maintenir la roue réceptrice 9 fixe en rotation pendant que la dent d'impulsions 28 est complètement rentrée dans la roue 26 comprennent, au lieu de la lame mobile 31, venue de matière avec la roue 26 ou rapportée à celle-ci, deux volets mobiles 39 articulés autour d'un axe 41 pouvant être commun sur la roue 26, de part et d'autre de la dent 28 et de son logement 27. Les volets 39 s'étendent radialement jusqu'à la périphérie de la roue 26 et sont dimensionnés de manière que leurs bords extérieurs 39a occupent un secteur circulaire de la périphérie de la roue 26 (cercle de verrouillage 26a) égal à la somme du secteur de passage de la dent 28 (largeur du logement 27) et des évidements 34. Des organes élastiques constitués par des ressorts 42, dont les extrémités sont fixées sur la roue 26, rappellent les volets 39 l'un vers l'autre dans leur position de fermeture du cercle de verrouillage 26a (Figure 8). La dent 28 et les volets 39 sont munis de moyens complémentaires permettant d'écarter les volets 39 au moment de la sortie de la dent 28. Dans l'exemple décrit, ces moyens comprennent un profil triangulaire 43, solidaire de la dent 28 et faisant saillie de celle-ci au niveau des volets 39, et deux rampes rectilignes 44 ménagées sur le bord intérieur des volets 39 pour pouvoir coopérer chacune avec un côté du profil 43.

Lorsque la dent 28 est rentrée dans la roue 26, les rampes 44 sont en appui sur les côtés correspondants du profil 43, et leurs bords extérieurs 39a complètent la circonférence de la roue 26 en verrouillant la roue 9 en rotation.

Lorsque la dent 28 sort, les côtés de son profil 43 glissent sur les rampes 44 et provoquent l'écartement des volets 39 jusqu'à ce que ceux-ci aient complètement dégagé le secteur angulaire de la dent 28 et des évidements 34 (Figure 9). Lorsque la dent 28 rentre à l'intérieur de la roue 26, les ressorts 42 rappellent les volets 39 dans leur position de fermeture.

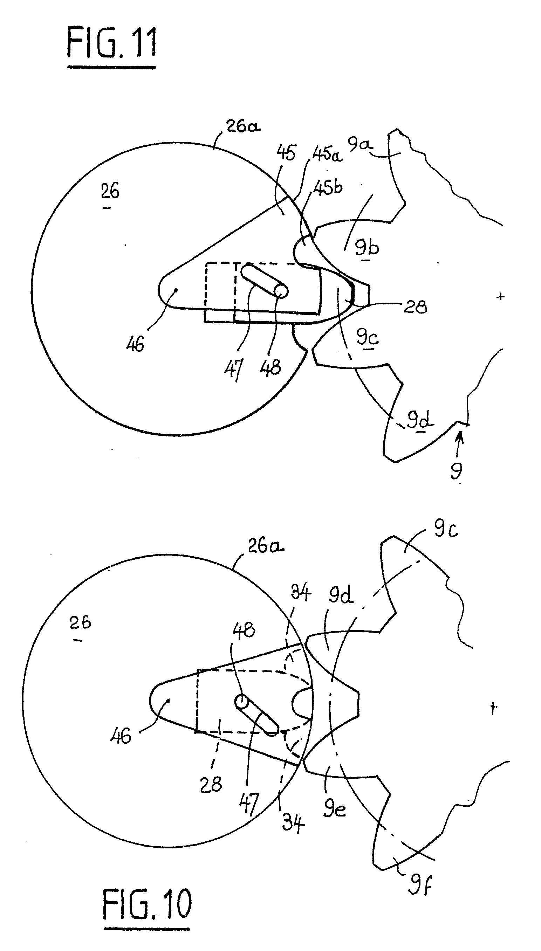

Dans le troisième mode de réalisation représenté aux Figures 10 et 11, les moyens de verrouillage de la roue 9 en rotation comprennent un volet radial 45 articulé sur l'axe 46 de la roue 26, et percé d'une lumière desmodromique 47 dans laquelle peut coulisser un pion 48 solidaire de la dent 28. Le bord extérieur 45a du volet 45 s'étend sur une portion angulaire du cercle de verrouillage 26a égale à la somme du secteur de passage de la dent 28 et des évidements 34, de manière à recouvrir complètement cette interruption du cercle de verrouillage 26a lorsque la dent 28 est rentrée (Figure 10). Une encoche 45b similaire aux dégagements 34 est ménagée dans la zone centrale du bord extérieur 45a, afin de venir se placer en regard d'un des évidements ou dégagements 34 lorsque la dent 28 est sortie (Figure 11).

La lumière 47 est inclinée de manière que le déplacement radial du pion 48 dans celle-ci fasse tourner le volet 45 autour de son axe 46. Lorsque la dent 28 est rentrée, l'encoche 45b se superpose sur la dent 28, de sorte que la continuité du cercle der verrouillage 26a est réalisée par l'extrémité de la dent 28. Quand la dent 28 commence à sortir, son pion 48 fait tourner le volet 45 jusqu'à ce que ce pion 48 vienne en butée à l'extrémité opposée de la lumière 47, l'encoche 45b se superposant alors à un dégagement 34, ce qui permet aux dents 9b, 9c,... d'engrener avec la dent d'impulsions 28.

## Revendications

1 - Programmateur électromécanique cyclique, comportant un moteur électrique (6), un train d'engrenages (7) à roue d'impulsions (26), entraîné par le moteur et dont une roue de sortie (5) engrène sur au moins un moyen (3, 4) d'entraînement d'un organe (1) à cycle de déplacement programmable, une roue réceptrice (9) apte à coopérer avec le train d'engrenages (7) pour recevoir de celui-ci des impulsions de commande du cycle de l'organe programmable, un circuit électrique (12, 13, 17, 18) associé à la zone réceptrice (9) et adapté pour transmettre au moteur (6) des ordres correspondant à la nature des impulsions reçues par la roue réceptrice, caractérisé en ce qu'il comprend des moyens pour faire délivrer par la roue d'impulsions (26) des impulsions uniquement dans des zones utiles prédéterminées du cycle de l'organe programmable (7), et en ce que le train d'engrenages (7) est un train différentiel réalisé sans démultiplication entre sa roue d'impulsions (26) et la roue de sortie (5).

2 - Programmateur selon la revendication 1, caractérisé en ce que la roue d'impulsions (26) contient au moins une dent (28) déplaçable radialement entre une position complètement escamotée à l'intérieur de ladite roue (26) et des positions dans lesquelles elle fait saillie radialement de cette roue et peut engrener avec la roue réceptrice (9) en la faisant tourner d'un angle déterminé (2 ), et la roue de commande est une roue-came (25) dans laquelle est ménagée une came (29) de guidage des déplacements de la dent d'impulsions (28).

3 - Programmateur selon la revendication 2, caractérisé en ce que le train différentiel (7) comprend un premier engrenage (25) monté fou sur l'arbre de sortie (6a), pourvu d'un nombre déterminé (X) de dents ou égal à un multiple de ce nombre (X), cet engrenage constituant la roue-came (25) de commande de la dent d'impulsions (28), un second engrenage (24) solidaire de l'arbre de sortie (6a) du moteur (6), pourvu de dents dont le nombre est supérieur ou inférieur d'une unité au nombre (X) ou égal au même multiple que la roue-came (25), nombre augmenté ou diminué d'un multiplicateur (M) égal au rapport du nombre de dents du premier engrenage (25) au nombre de tours de la roue de sortie (5) durant un cycle complet, et un pignon (8) en prise avec le premier et le second engrenages (25, 24) afin de transmettre au premier (25) la rotation du second (24), et ledit second engrenage (24), la roue d'impulsions (26) et la roue de sortie (5) tournent à la même vitesse de rotation.

4 - Programmateur selon la revendication 3, caractérisé en ce que la came (29) comporte une rainure de guidage recevant un picot (30) de la dent d'impulsions (28) et présentant des rampes (29b, 29b',...29e) profilées de façon que, le premier engrenage (25) étant entraîné par le pignon (8) à une vitesse de rotation légèrement différente de celle du second engrenage (24), cette vitesse différentielle provoque le coulissement du picot (30) dans la came (29) et par conséquent le déplacement de la dent d'impulsions (28) le long des rampes suivant une loi déterminée par le profil desdites rampes, entre au moins une position complètement rentrée dans la roue d'impulsions (26) et des positions sorties radialement.

5 - Programmateur selon l'une des revendications 2 à 4, caractérisé en ce qu'il comporte des moyens pour maintenir la roue réceptrice (9) fixe en ro tation pendant que la dent d'impulsions (28) est complètement rentrée à l'intérieur de la roue d'impulsions (26).

6 - Programmateur selon la revendication 5, caractérisé en ce que lesdits moyens comprennent au moins un élément mobile (31) mécaniquement lié à la roue d'impulsions (26) et dont la périphérie s'étend sur un secteur angulaire (32) sensiblement supérieur à celui nécessaire à la sortie radiale de la dent (28) et complétant la circonférence (26a) de la roue d'impulsions (26) lorsque la dent est complètement rentrée, cet élément mobile (31) pouvant coopérer avec la dent de manière à dégager le secteur angulaire de passage de la dent lorsque celle-ci doit être sortie, et à occuper ce secteur angulaire lorsque la dent est rentrée.

7 - Programmateur selon la revendication 6, caractérisé en ce que des évidements (34) sont ménagés sur la périphérie de la roue d'impulsions (26) de chaque côté du secteur angulaire de passage de la dent (28) afin de permettre l'engrènement des dents (9a, 9b,...) de la roue réceptrice (9) avec la dent d'impulsions (28), et ledit élément mobile (31) s'étend angulairement sur une portion de la circonférence sensiblement égale à la somme du secteur de passage de la dent (28) et des évidements latéraux (34).

8 - Programmateur selon la revendication 7, caractérisé en ce que l'élément mobile (31) est une lame flexible solidaire de la roue d'impulsions (26), et pourvue d'un bossage (35) apte à coopérer avec un bossage correspondant (36) formé sur la dent d'impulsions (28) pour soulever la lame (31) lorsque la dent sort de la roue d'impulsions (26) et pour l'abaisser en reformant la circonférence de cette dernière lors de la rentrée de la dent.

9 - Programmateur selon les revendications 6 et 7, caractérisé en ce que lesdits moyens comprennent des volets mobiles (39) articulés sur la roue d'impulsions (26) de part et d'autre de la dent (28), s'étendant radialement jusqu'à la périphérie de la roue (26) et occupant une portion de ladite périphérie pratiquement égale à la somme du secteur angulaire de passage de la dent (28) et des évidements latéraux (34) de dégagement, et la dent ainsi que les volets (39) sont munis de moyens complémentaires (43, 44) d'écartement des volets lors de la sortie de la dent, des organes élastiques (42) rappelant ces volets (39) dans une position de fermeture de ladite portion de la périphérie de la roue d'impulsions (26) lorsque la dent (28) est rentrée.

10 - Programmateur selon les revendications 6 et 7, caractérisé en ce que l'élément mobile est un volet radial (45) articulé sur la roue d'impulsions (26), percé d'une lumière (47) dans laquelle peut coulisser un pion (48) solidaire de la dent (28) et dont le bord extérieur s'étend sur une portion angulaire de la circonférence de la roue d'impulsions (26) égale à la somme du secteur angulaire de passage de la dent (28) et des évidements latéraux (34) de dégagement, la lumière (47) et le pion (48) étant réalisées de manière que la sortie de la dent (28) provoque une rotation du volet (45) dégageant les évidements (34) et qu'inversement une rentrée de la dent (28) replace le volet (45) dans une position où il recouvre les évidements (34) et complète la circonférence de la roue (26).

11 - Programmateur selon la revendication 10, caractérisé en ce qu'une encoche (45b) similaire aux évidements (34) de la roue (26) est ménagée dans le bord extérieur (45a) du volet (45) et positionée de façon à venir se placer en regard d'un desdits évidements (34) lorsque la dent (28) est sortie.

FIG.1

FIG.3

FIG.2

# FIG.12

# FIG.4

<u>FIG.7</u>

<u>FIG.6</u>

<u>FIG.5</u>

EP 0 308 292 A1

FIG.9

FIG.8

# FIG. 11

# FIG. 10

Office européen
des brevets

**RAPPORT DE RECHERCHE EUROPEENNE**

Numero de la demande

EP 88 40 2206

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | FR-A-2 257 991 (J. LOCK WINDENFABRIK) <br> * En entier * <br> --- | 1-3 | H 01 H 3/40 <br> H 01 H 19/18 |
| A | DE-B-1 281 537 (GESELLSCH. FÜR ANTRIEBTECHNIK) <br> * En entier * <br> --- | 1-3 | |
| A | FR-A-2 360 935 (JARL) <br> * Pages 5-6 * <br> --- | 1-3 | |
| A | FR-A- 532 406 (ADDOR) <br> * En entier * <br> ----- | 1-3 | |

DOMAINES TECHNIQUES
RECHERCHES (Int. Cl.4)

H 01 H 3/00
H 01 H 19/00

Le présent rapport a été établi pour toutes les revendications

| Lieu de la recherche | Date d'achèvement de la recherche | Examinateur |
|---|---|---|
| LA HAYE | 07-10-1988 | DESMET W.H.G. |